# EUROPEAN PATENT APPLICATION

(11) **EP 3 424 639 A1**
(43) Date of publication of application: **09.01.2019**
(21) Application number: 18181798.2
(22) Date of filing: 05.07.2018
(51) Int. Cl.: B23Q 7/04, B23Q 7/10

(54) **MACHINING SYSTEM AND HOLDER**

(30) Priority: 06.07.2017 JP 2017132771
(71) Applicant: DGSHAPE Corporation, Hamamatsu-shi, Shizuoka 431-2103 (JP)
(72) Inventor: SUYAMA, Akihiro, Hamamatsu-shi, Shizuoka 4312103 (JP); KANJA, Tetsuya, Hamamatsu-shi, Shizuoka 4312103 (JP); OHARA, Hisashi, Hamamatsu-shi, Shizuoka 4312103 (JP)
(74) Representative: Grünecker Patent- und Rechtsanwälte PartG mbB

(57) **Abstract**

To provide machining systems that enable milling in a machining device even in the event that a workpiece transfer device cannot be used.

A machining system including: a machining device for milling a workpiece depending on machining data; a workpiece transfer device for storing the workpieces and transferring a certain workpiece to the machining device depending on the machining data; and a controller capable of switching, in the event of operating the machining device, a first mode for operating the workpiece transfer device and a second mode for stopping the workpiece transfer device.

## Description

### Technical field

The present invention relates to machining systems and holders.

### Background art

Machining systems including, as a single unit, a machining device that mills workpieces and a workpiece transfer device (disk changer) that stores a plurality of workpieces and automatically transfer a certain workpiece to the machining device are known ("DWX-52DC" [online], DGSHAPE Corporation, retrieved on June 30, 2017 at: http://www.rolanddg.co.jp/product/pdf/DWX-52DC.pdf). According to such machining systems, it is possible to machine various target objects in sequence.

The aforementioned machining systems, however, have a drawback that, in the event that the workpiece transfer device fails, automatic transfer of the workpieces cannot be achieved and machining operations in the machining device is thus stopped.

An object of the present invention is to provide machining systems that enable milling in the machining device even in the event that the workpiece transfer device cannot be used, and holders that can be used in such machining systems.

### Summary of the Invention

A main invention to achieve the aforementioned object is a machining system including: a machining device for milling a workpiece depending on machining data; a workpiece transfer device for storing the workpieces and transferring a certain workpiece to the machining device depending on the machining data; and a controller capable of switching, in the event of operating the machining device, a first mode for operating the workpiece transfer device and a second mode for stopping the workpiece transfer device. Other features of the present invention will be clarified by the description of the specification and drawings described later.

According to the present invention, it becomes possible to perform milling in the machining device even in the event that the workpiece transfer device cannot be used.

### Brief description of the drawings

Fig. 1 is a diagram illustrating a structure of a machining system according to a first embodiment;
Fig. 2A is a front view of a machining device and a workpiece transfer device according to the first embodiment;
Fig. 2B is a top view of the machining device and the workpiece transfer device according to the first embodiment;
Fig. 3 is a diagram illustrating a mode selection screen according to the first embodiment;
Fig. 4A is a diagram illustrating a structure of a holder according to a second embodiment;
Fig. 4B is a diagram illustrating the structure of the holder according to the second embodiment;
Fig. 4C is a diagram illustrating the structure of the holder according to the second embodiment;
Fig. 5A is a diagram illustrating a structure of an adapter according to the second embodiment;
Fig. 5B is a diagram illustrating the structure of the adapter according to the second embodiment;
Fig. 6A is a diagram for supplementing the description about how to remove the adapter from the holder in the second embodiment;
Fig. 6B is a diagram for supplementing the description about how to remove the adapter from the holder in the second embodiment;
Fig. 6C is a diagram for supplementing the description about how to remove the adapter from the holder in the second embodiment;
Fig. 6D is a diagram for supplementing the description about how to remove the adapter from the holder in the second embodiment;
Fig. 7 is a diagram illustrating a structure of a holder according to a modified embodiment;
Fig. 8A is a diagram illustrating the structure of the holder according to a modified embodiment; and
Fig. 8B is a diagram illustrating the structure of the holder according to the modified embodiment.

### Detailed description of the invention

### === First embodiment ===

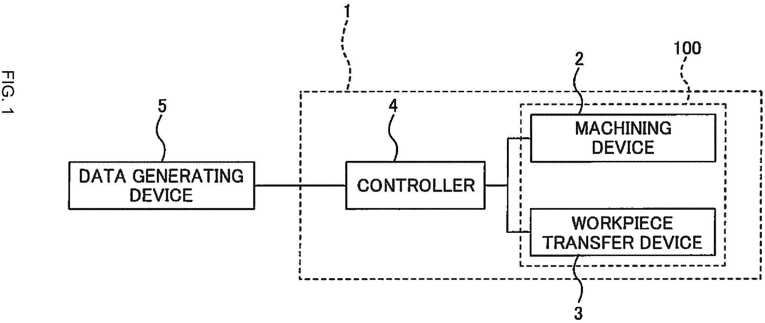

Referring to Figs. 1 to 3, a machining system 1 according to a first embodiment is described.

### <Machining system>

Fig. 1 is a diagrammatic representation illustrating the machining system 1 according to the present embodiment. The machining system 1 includes a machining device 2, a workpiece transfer device 3 (disk changer), and a controller 4.

The machining device 2 performs milling of workpieces depending on machining data. The workpiece transfer device 3 stores a plurality of workpieces and transfers a certain workpiece to the machining device 2 depending on the machining data. It should be noted that each workpiece according to the present embodiment is used with being secured to an adapter. The adapter is a support member for holding a workpiece in the machining device 2.

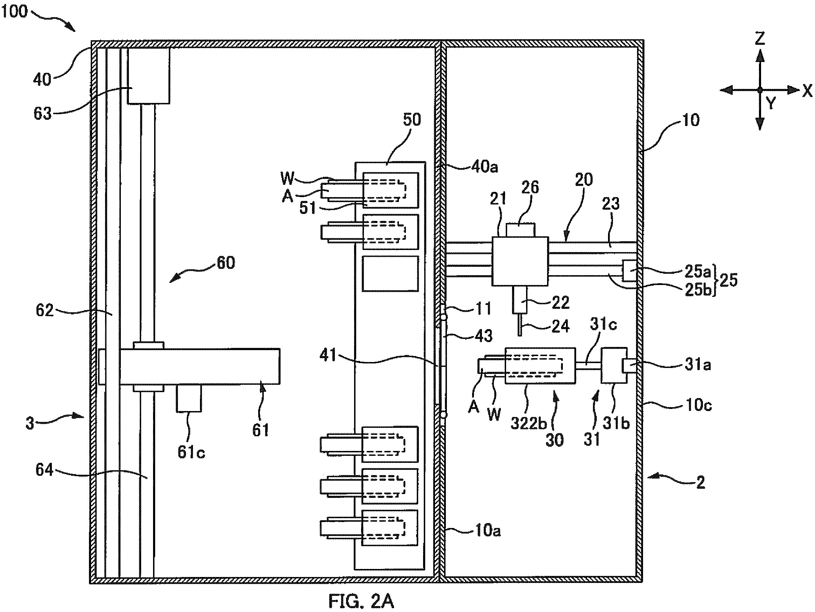

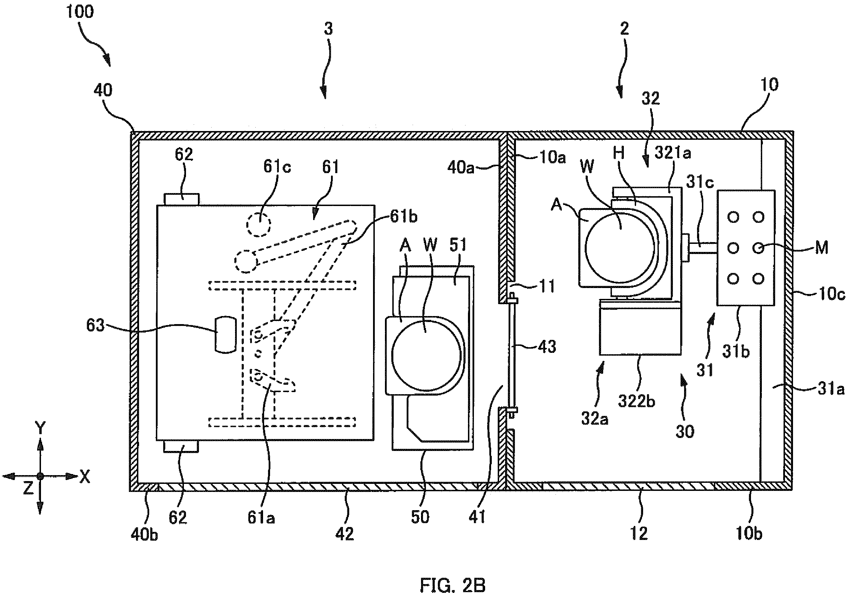

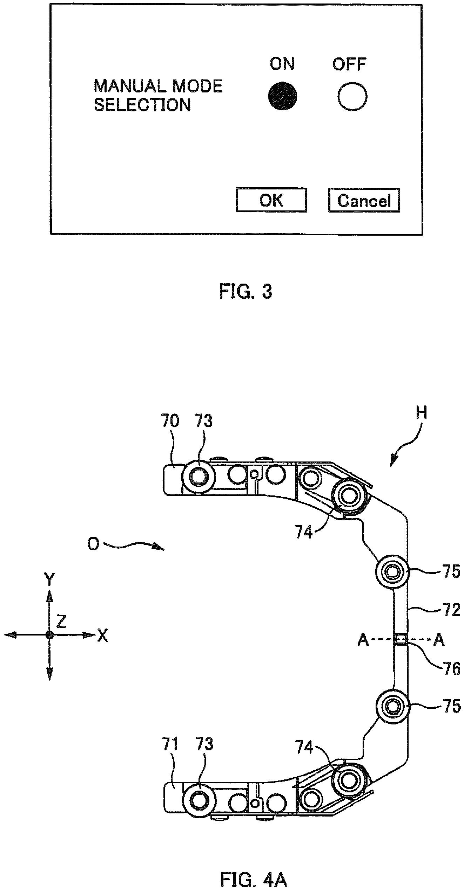

In the present embodiment, at least the machining device 2 and the workpiece transfer device 3 are formed as a single unit (see, for example, Fig. 2A). Hereinafter, a combination of the machining device 2 and the workpiece transfer device 3 may be referred to as a "system main unit 100." Fig. 2A is a diagram of the system main unit 100 as seen from the front. Fig. 2B is a diagram of the system main unit 100 as seen from the top. In Figs. 2A and 2B, some components (such as open/close doors 12 and 42 in Fig. 2A and a ceiling portion of a housing 10 and a milling mechanism 20 in Fig. 3) are not illustrated for the purpose of describing an internal structure of the system main unit 100. In Figs. 2A and 2B, three axes that are perpendicular to each other are referred to as X-, Y-, and Z-axes. The X-axis corresponds to an axis along the right-and-left direction (width direction) when the system main unit 100 is seen from the front. The Y-axis corresponds to an axis along the front-and-back direction (depth direction) when the system main unit 100 is seen from the front. The Z-axis corresponds to an axis along the top-and-bottom direction (height direction) when the system main unit 100 is seen from the front. The system main unit 100 is assumed to be placed on an XY plane defined by the X- and Y-axes. It should be noted that the directions are defined merely for the purpose of facilitating the description and do not limit how the system main unit 100 is placed.

The controller 4 is a computer for performing various control operations related to the machining device 2 and the workpiece transfer device 3. The controller 4 may be integrated with the system main unit 100 as a single unit or formed as a unit separated from the system main unit 100.

The machining system 1 is connected to a data generating device 5 in such a manner that the machining system 1 can communicate with the data generating device 5. The data generating device 5 is for generating machining data used when a workpiece is machined to obtain a target object. The data generating device 5 supplies the generated machining data to the controller 4. The data generating device 5 may be, for example, a typical CAD/CAM system. The machining data includes data used in the machining device 2 (such as data representing the shape of a target object) and data used in the workpiece transfer device 3 (such as data for designating a workpiece used to machining).

### <Machining device>

As shown in Figs. 2A and 2B, the machining device 2 includes the housing 10, the milling mechanism 20, and a workpiece holding mechanism 30.

The housing 10 is a box-shaped member that forms an outer frame of the machining device 2. Inside the housing 10, the milling mechanism 20 and the workpiece holding mechanism 30 are disposed. A transfer opening 11 into which a workpiece W (a workpiece W secured to an adapter A) is to be inserted is formed in a left side portion 10a of the housing 10 (see Fig. 2A). Further, the open/close door 12 is provided on a front portion 10b of the housing 10 (see Fig. 2B). An operator has access to the inside of the machining device 2 through the open/close door 12.

The milling mechanism 20 is for milling the workpiece W. The milling mechanism 20 includes a carriage 21, a spindle 22, a guide rail 23, a milling tool 24, an X-axis movement mechanism 25, and a Z-axis movement mechanism 26.

The carriage 21 is a member on which the spindle 22 is mounted. The guide rail 23 is a member extending along the X-direction in the housing 10. The carriage 21 is movable along the guide rail 23 in the X-direction. The spindle 22 is a member for holding the milling tool 24. The spindle 22 is movable in the Z-direction relative to the carriage 21.

The milling tool 24 is for machining the workpiece W. The milling tool 24 is rotatable by a motor (not shown) disposed in the carriage 21 about a Z-axis. Further, for the milling tool 24 used for milling, one of different kinds of tools such as an endmill and a drill is chosen depending on the shape thereof. A plurality of milling tools 24 are stored in the machining device 2 (tool magazine M; see Fig. 2B). The machining device 2 chooses the milling tool 24 suitable for machining a target object, hold it with the spindle 22, and machine the target object, based on the control by the controller 4.

The X-axis movement mechanism 25 is for causing the carriage 21 to move in the X-direction. The X-axis movement mechanism 25 includes a motor 25a and a transmission mechanism 25b. The motor 25a produces a force (driving force) to cause the carriage 21 to be driven. The motor 25a is provided at the right end of the transmission mechanism 25b. The transmission mechanism 25b is for transmitting the driving force produced by the motor 25a to the carriage 21. The transmission mechanism 25b is, for example, a belt-like mechanism. The transmission mechanism 25b is installed parallel to the guide rail 23 between the left side portion 10a and a right side portion 10c of the housing 10. The Z-axis movement mechanism 26 is for causing the spindle 22 (the milling tool 24 held by the spindle 22) to move in the Z-direction.

The workpiece holding mechanism 30 is for holding the workpiece W and causing the held workpiece to move. The workpiece holding mechanism 30 includes a Y-axis movement mechanism 31 and a holding unit 32.

The Y-axis movement mechanism 31 is for causing the holding unit 32 to move in the Y-direction. The Y-axis movement mechanism 31 includes a driving mechanism 31a, a moving unit 31b, and a motor shaft 31c. The driving mechanism 31a is attached to the right side portion 10c so that it is positioned parallel to the Y-axis. The driving mechanism 31a moves the moving unit 31b in the Y-direction. Inside the moving unit 31b, a motor (not shown) is provided for turning the holding unit 32 about an X-axis. The motor shaft 31c of the motor is projected from the moving unit 31b in the X-direction. Further, a tool magazine M for storing a plurality of milling tools 24 is disposed on the top surface of the moving unit 31b (see Fig. 2B).

The holding unit 32 holds the workpiece W and causes the held workpiece W to move about a predetermined axis. The holding unit 32 includes a holder H and a tilt mechanism 32a. The holder H is a mechanism that holds the workpiece W (the adapter A to which the workpiece W is secured). Although the holder H in Fig. 2B has a clamp-like shape and can hold a disk-shaped workpiece W by grasping it, but the way of holding the workpiece W is not limited thereto. For example, the workpiece W may be held indirectly by placing the workpiece W on the holder H having a table-like shape.

The tilt mechanism 32a is for tilting or turning the workpiece W about an X-axis and a Y-axis. The tilt mechanism 32a includes a movement frame 321a and a drive unit 322b. The movement frame 321a is a substantially U-shaped member and is connected to the motor shaft 31c of the Y-axis movement mechanism 31. Accordingly, for example, when the motor shaft 31c is rotated about an X-axis, the movement frame 321a can also turn about the X-axis. Further, the movement frame 321a supports the holder H in such a manner that the holder H can be tilted or turned about a Y-axis. The drive unit 322b has a motor (not shown). The drive unit 322b causes the holder H tilt or turn about the Y-axis by causing the motor to drive.

### <Workpiece transfer device>

As shown in Figs. 2A and 2B, the workpiece transfer device 3 includes a housing 40, a storage stand 50, and a workpiece transfer mechanism 60.

The housing 40 is a box-shaped member that forms an outer frame of the workpiece transfer device 3. The machining device 2 and the workpiece transfer device 3 are integrated as a single unit by connecting a right side portion 40a of the housing 40 and the left side portion 10a of the housing 10. Inside the housing 40, the storage stand 50 and the workpiece transfer mechanism 60 are disposed. In the right side portion 40a, a transfer opening 41 for transferring the workpiece W (i.e., the workpiece W secured to the adapter A) to the machining device 2 is formed (see Fig. 2A). The transfer opening 41 and the transfer opening 11 in the housing 10 are overlapped with each other. In other words, the inner space of the machining device 2 and the inner space of the workpiece transfer device 3 are communicated with each other via the transfer openings. Further, the open/close door 42 is provided on a front portion 40b of the housing 40 (see Fig. 2B). An operator has access to the inside of the workpiece transfer device 3 through the open/close door 42.

A door 43 for opening and closing the transfer opening 41 is provided on the right side portion 40a. The door 43 is structured so that it opens outward from the housing 40 (i.e., inward into the housing 10).

The storage stand 50 stores a plurality of workpieces W in the vertical direction. In the housing 40, the storage stand 50 is disposed at the side of the right side portion 40a. The storage stand 50 has a plurality of holding shelves 51 for storing the workpieces. Each workpiece W stored in the storage stand 50 (one of the holding shelves 51) is secured to the adapter A. At a central portion of the storage stand 50, there is a space through which the workpieces W can be transferred by the workpiece transfer mechanism 60 toward the machining device 2.

The workpiece transfer mechanism 60 is for transferring the workpieces W stored in the storage stand 50 to the machining device 2. The workpiece transfer mechanism 60 has a clamp unit 61, a guide rail 62, a motor 63, and a transmission mechanism 64.

The clamp unit 61 holds the workpiece W stored in the storage stand 50 and transfers it to the machining device 2. The clamp unit 61 includes a clamp 61a, a feeder mechanism 61b, and a motor 61c. The clamp 61a is a mechanism that holds the workpiece W by, for example, magnetic attraction, suction, clamping, locking or engagement. The clamp 61a is provided at one end of the feeder mechanism 61b. The feeder mechanism 61b is an articulated member that can be folded and unfolded in the X-direction. The motor 61c produces a force to cause the feeder mechanism 61b to be driven.

The guide rail 62 is a member extending in the Z-direction in the housing 40. In the present embodiment, two guide rails 62 are provided along the Y-direction in such a manner that the clamp unit 61 is positioned between the two guide rails 62. The clamp unit 61 is movable along the guide rails 62 in the Z-direction. The motor 63 is provided at the upper end of the transmission mechanism 64. The motor 63 produces a force (driving force) to cause the clamp unit 61 to be driven in the Z-direction. The transmission mechanism 64 is for transmitting the driving force produced by the motor 63 to the clamp unit 61. The transmission mechanism 64 is, for example, a belt-like mechanism. The transmission mechanism 64 extends parallel to the guide rail 62 in the housing 40.

The configurations of the machining device 2 and the workpiece transfer device 3 described above are merely examples and are not limited thereto. For example, in the machining device 2, the milling mechanism 20 may be configured to be moved only in the Y-direction and the workpiece holding mechanism 30 may be configured to be moved in the Z-direction as well.

### <Controller>

The controller 4 controls the operation of the machining device 2 and the workpiece transfer device 3 based on the machining data generated by the data generating device 5. Specifically, the controller 4 designates the workpiece W to be machined based on the machining data and sends a signal to the workpiece transfer device 3 to direct the workpiece transfer device 3 to transfer the designated workpiece W to the machining device 2. The workpiece transfer device 3 chooses the workpiece W in question depending on that signal and transfers it to the machining device 2 by the workpiece transfer mechanism 60. The machining device 2 holds, with the workpiece holding mechanism 30, the workpiece W that has been transferred to it. On the other hand, the controller 4 sends, for example, data representing the shape of a target object to the machining device 2 based on the machining data. The machining device 2 performs, based on the data, milling of the workpiece W that has been held. Typically, the machining data incudes data representing the shapes of a plurality of target objects. Accordingly, the machining system 1 can perform the aforementioned processing continuously.

The machining system 1 according to the present embodiment has, as modes used in milling, a first mode for operating the workpiece transfer device 3 and a second mode for stopping the operation of the workpiece transfer device 3. The first mode is for an automatic operation of all of the transfer of the workpiece W and the machining of the workpiece W. In other words, in this mode, both of the machining device 2 and the workpiece transfer device 3 are operated. On the other hand, the second mode is a manual mode in which the workpiece W is machined automatically but the workpiece W is transferred manually by an operator. In other words, in this mode, the machining device 2 is operated but the workpiece transfer device 3 is not. In the event that the workpiece transfer device 3 cannot be used for some reason such as its malfunction, it is possible to continue the machining of the workpiece W by switching to the second mode. The controller 4 switches the first mode and the second mode based on an instruction input from an operator.

Fig. 3 shows a mode selection screen displayed on a display device (not shown) of the controller 4. The operator can set these modes via the graphical user interface (GUI) on the controller 4. Fig. 3 shows a status where the manual mode is enabled (the second mode is selected). In the example shown in Fig. 3, disabling the manual mode results in enabling the first mode. When the operator selects an operation mode on the mode selection screen, the controller 4 switches the operation mode to the selected mode. Specifically, the controller 4 performs no processing on the data used in the workpiece transfer device 3 (e.g., data related to the transfer of the workpiece W such as a workpiece No. (adapter No.) for use in designating the workpiece W to be machined) among the data included in the machining data and does not send such data to the workpiece transfer device 3. In contrast, the controller 4 sends, to the machining device 2, the data used in the machining device 2 (e.g., shape data such as data representing XYZ coordinates for designating surface contour of a target object) among the data included in the machining data. Accordingly, the machining device 2 can perform milling based on that data.

It should be noted that the machining device 2 and the workpiece transfer device 3 described above are not the only components to which the control of switching between the first mode and the second mode is applied. For example, a similar control can be achieved by integrating a program that performs a control as described above into a known machining system (a structure with a machining device and a workpiece transfer device as a single unit). Alternatively, it is also possible to provide a program to a computer using a non-transitory computer readable medium with an executable program thereon. Examples of the non-transitory computer readable medium include magnetic recording media (such as flexible disks, magnetic tapes, and hard disk drives), and CD-ROMs (read-only memories).

As can be seen from the above, according to the machining system 1 of the present embodiment, it is possible to switch the first mode for operating the workpiece transfer device 3 and the second mode for stopping the operation of the workpiece transfer device 3 when the machining device 2 is operated.

Thus, even in the event that the workpiece transfer device 3 cannot be used, machining by the machining device 2 can be continued by switching the mode to the second mode and manually replacing workpieces by an operator. In other words, according to the machining system 1 of the present embodiment, even in the event that the workpiece transfer device 3 cannot be used, milling in the machining device 2 can be achieved.

### === Second embodiment ===

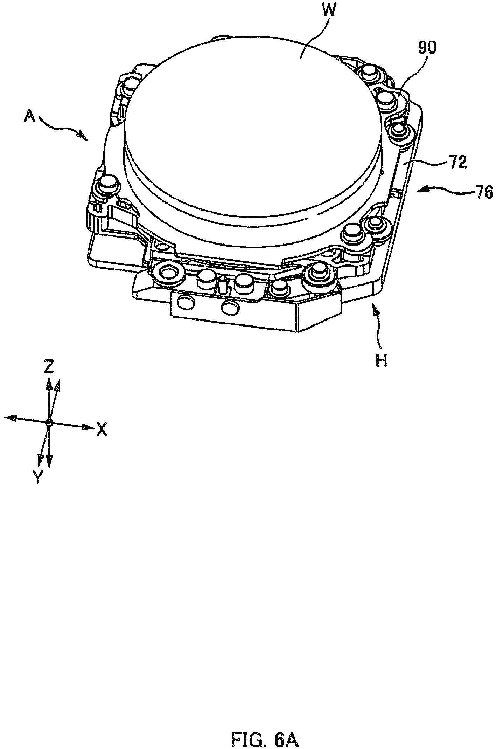

Next, referring to Figs. 4A to 6D, a holder H according to the second embodiment is described. For example, when the milling is performed in the second mode (manual mode) described in the first embodiment, the replacement of the workpieces W should be made by the operator himself. On the other hand, each workpiece W is tightly secured to the holder H via the adapter A so that the workpiece W is not displaced during the milling. Accordingly, it is difficult for the operator to remove the workpiece W by merely exerting a small force. Further, in some cases, it may be difficult to exert a sufficient force to remove the workpiece W because of a limited working space in the machining device 2. Further, by exerting an excessive force, the workpiece holding mechanism 30 may be broken or, even if the operator can remove the workpiece W, he might get injured with his hand hitting against, for example, the housing 10 of the machining device 2 under the influence of the motion for the removal.

With respect to this, in the present embodiment, a structure that allows an operator to remove the workpiece W (adapter A) held in the holder H easily is described. In Figs. 4A to 6D, three axes that are perpendicular to each other are referred to as X-, Y-, and Z-axes. The X-axis corresponds to an axis along the direction of inserting and removing the adapter A into and from the holder H (the depth direction of the holder H). The Y-axis corresponds to an axis along the width direction of the holder. The Z-axis corresponds to an axis along the height direction of the holder H. The direction in which the adapter A is inserted into the holder H along the X-axis is referred to as an "insertion direction" and the direction in which the adapter A is removed along the X-axis is referred to as a "removal direction."

### <Holder>

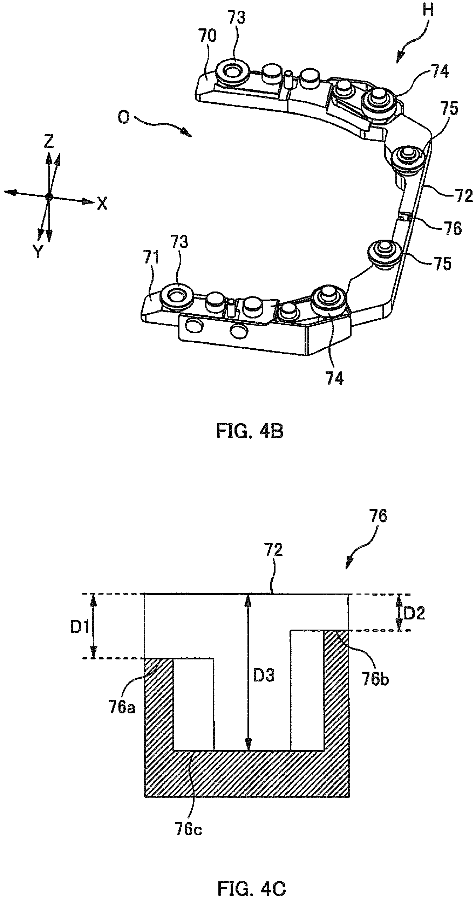

Fig. 4A is a top view of the holder H as seen from the Z-direction. Fig. 4B is a perspective view of the holder H, and Fig. 4C is a cross section of a base portion 72 shown in Fig. 4A taken along the line A-A. The holder H holds a workpiece W (an adapter A to which the workpiece W is secured) that has been inserted by the workpiece transfer device 3 or an operator. The holder H is formed to have a substantially U-shape (substantially arc-like shape) when seen from the Z-direction (see Fig. 4A). The holder H has an arm portion 70, an arm portion 71, and the base portion 72. Each of the arm portions 70 and 71 is a substantially straight member extending in the X-direction. The base portion 72 is a substantially straight member extending in the Y-direction. One end of the base portion 72 is connected to a proximal end of the arm portion 70 and the other end is connected to a proximal end of the arm portion 71. The joints between them have a curved shape. A gap between the tips of the arm portions 70 and 71 corresponds to an opening O. The opening O is a place into which the adapter A is inserted.

Each of the arm portion 70 and the arm portion 71 is provided with a guide roller 73, a pinch roller 74, and a positioning roller 75. The guide rollers 73 are members for guiding the adapter A when the adapter A inserted through the opening O moves toward the base portion 72. The pinch rollers 74 are members for fixing the adapter A to the holder H. The positioning rollers 75 are members for positioning the adapter A inserted into the holder H. The adapter A that has been positioned by the positioning rollers 75 is in a state of being in contact with the base portion 72.

At the center of the base portion 72, a recess 76 is formed. In the present embodiment, the recess 76 is formed in the top surface of the base portion 72 as a notch structure having a predetermined width in the Y-direction and extending along the entire length thereof in the X-direction. The side surfaces of the recess 76 are parallel to the Z-axis. The bottom surface of the recess 76 includes a first bottom surface 76a at the side of the opening O, a second bottom surface 76b opposite to the first bottom surface 76a, and a central third bottom surface 76c between the first bottom surface 76a and the second bottom surface 76b. Each bottom surface has different depths measured from the top surface of the base portion 72 depending on the positions in the X-direction. When the depth from the top surface of the base portion 72 to the first bottom surface 76a is defined as D1, the depth from the top surface of the base portion 72 to the second bottom surface 76b is defined as D2, and the depth from the top surface of the base portion 72 to the third bottom surface 76c is defined as D3, the relationship "D3 > D1 > D2" (see Fig. 4C). Further, each of the first to third bottom surfaces 76a to 76c is a plane parallel to the XY plane. It should be noted that the bottom surface may be a plane that is not parallel to the XY plane. On the other hand, when the bottom surface is a plane parallel to the XY plane, an operation to machine the recess 76 is easier.

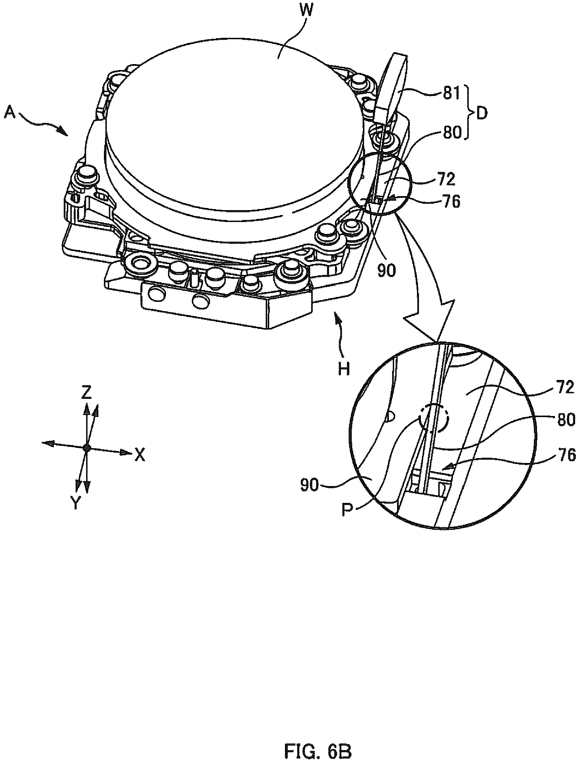

Into the recess 76, an insertion portion 80 of a device D is inserted (see Fig. 6B). At this time, the tip of the insertion portion 80 contacts the third bottom surface 76c. By tilting the inserted device D toward the adapter A held in the holder H, it is possible to release the secure fixture of the adapter A (details are described later). It should be noted that the position of the recess is not limited at the center of the base portion 72 as long as the fixture of the adapter A can be released. For example, the recess 76 may be provided at a position displaced from the center of the base portion 72 in the Y-direction. Further, the number of the recesses is not limited and two or more recesses 76 may be provided.

### <Adapter>

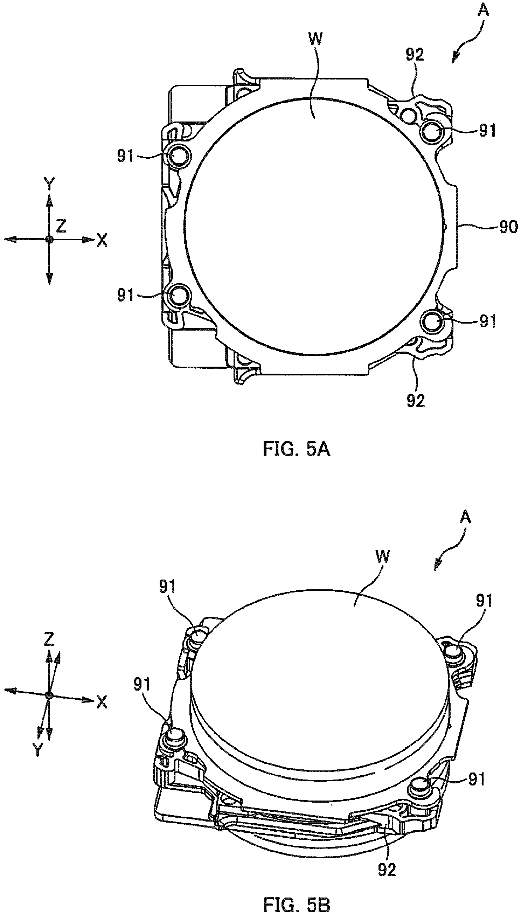

The adapter A is a device for securing the workpiece W. Fig. 5A is a top view of the adapter A as seen from the Z-direction and Fig. 5B is a perspective view of the adapter A. Figs. 5A and 5B show a state in which the workpiece W is secured to the adapter A.

Different workpieces W are made of different materials and different shapes. Accordingly, it may be difficult to directly hold the workpiece W with the holder H or it may become necessary to replace the holder H for the shape of the workpiece W depending on the type of the workpiece W. On the other hand, by securing the workpiece W to the adapter A, it is possible to hold the workpiece using a single holder H regardless of the material and the shape.

The adapter A may have any shape as long as it can be held by the holder H. In the present embodiment, the adapter A is constituted by a ring-shaped frame body 90. The workpiece W can be secured to the adapter A by fitting the workpiece W into the hollow portion of the frame body 90 and securing it by fixing members 91 provided on the frame body 90. Further, depressions 92 are formed in both side surfaces of the frame body 90 in the Y-direction to fix the pinch rollers 74 when the adapter A is inserted into the holder H.

### <Removal of the adapter>

Next, referring to Figs. 6A to 6D, an operation of removing the adapter A from the holder H is described. Figs. 6A to 6D are perspective views of the holder H and the adapter A.

Fig. 6A shows a state in which the adapter A is held by the holder H. In this case, the frame body 90 is in a state of being in contact with the base portion 72 of the holder H. In the manual mode, the operation of replacing the adapter A (work W) is performed from this state.

To remove the adapter A, the device D is prepared first. The device D has the rod-shaped insertion portion 80 and a handle 81 for grip by an operator. The device D may be, for example, a tool such as a flat-blade screwdriver, a cross-recess screwdriver, or a hexagon wrench provided in the machining system 1, or it may be an elongated and rigid member such as a metal pin. When a device with a sharp tip such as a flat-blade screwdriver is used, it is preferable to attach, a for example, a resin cap so as not to damage, for example, the holder H at the tip or the side of the insertion portion 80.

To remove the adapter A, the insertion portion 80 is inserted in the recess 76 of the holder H (see Fig. 6B). At this time, the position of the insertion portion 80 is adjusted so that a portion of the insertion portion 80 is in contact with the adapter A (the frame body 90) (see the enlarged view in Fig. 6B; the contacted portion is denoted by "P").

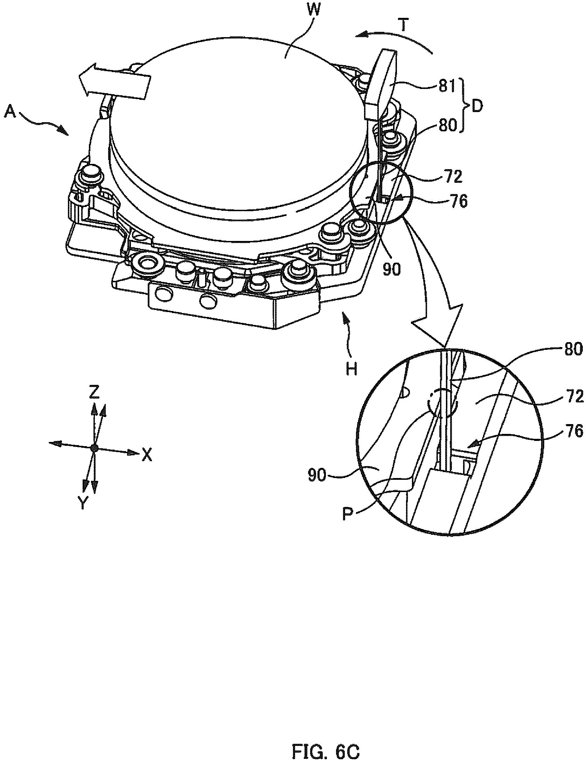

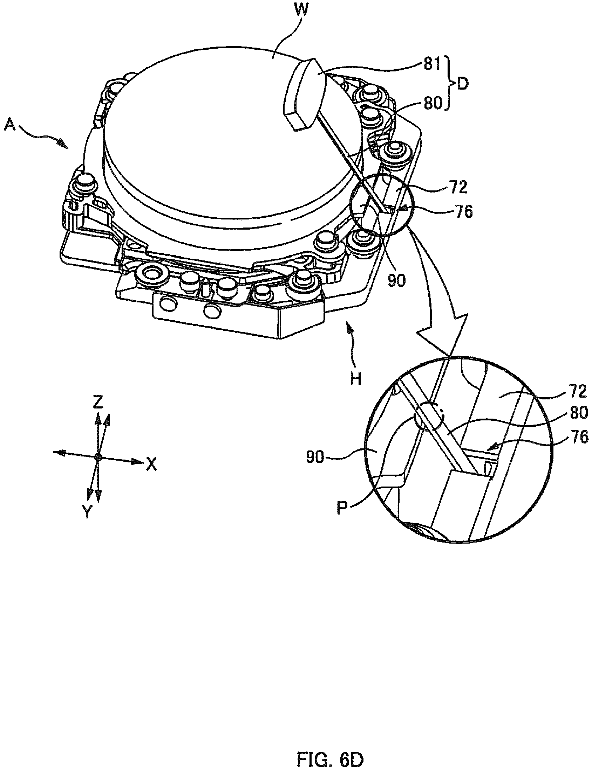

Next, the operator grips the handle 81 of the device D and tilts the device D toward the adapter A (see Fig. 6C; an arrow T in Fig. 6C shows the direction of tilting the device D). By this operation, the tip of the insertion portion 80 inserted into the recess 76 serves as a fulcrum and the contacted portion P between the insertion portion 80 and the adapter A serves as the point of action, so that a force in the removal direction can be exerted on the adapter A (see a thick arrow along the X axis in Fig. 6C). By this force, the adapter A is moved in the removal direction, whereby the state in which the adapter A is held by the holder H is released (see Fig. 6D). In this case, since the pinch rollers 74 are out of the depressions 92 of the adapter A, the operator can easily pull out the adapter A manually.

As described above, in the holder H according to the present embodiment, the opening O into which the adapter A with the workpiece W secured thereto is inserted is formed, and the adapter A can be held. In addition, the recess 76 is formed in a portion of the holder H. By tilting the device D inserted in the recess 76 toward the adapter A being held, it is possible to release the state where the adapter A is held.

According to such a configuration, the state in which the adapter A is held can be released merely by applying a little force to the device D inserted in the recess 76. Therefore, the adapter A can be easily removed and thus it becomes easy to replace the adapter A manually. Such a configuration is particularly effective when the manual mode described in the first embodiment is used.

### === Others ===

Although the embodiments for carrying out the present invention have been described above, these embodiments are for facilitating the understanding of the present invention and are not intended to limit the present invention. Further, the present invention can be modified and improved without departing from the spirit thereof, and equivalents thereof are also included in the present invention. For example, the following modifications are possible for the holder H.

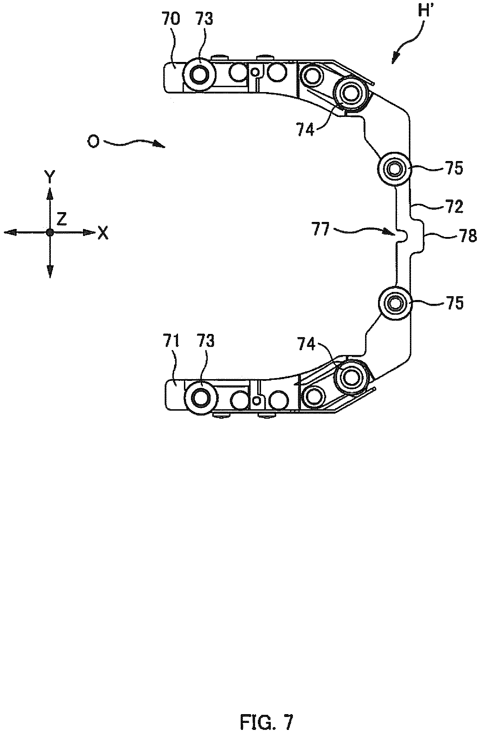

Fig. 7 is a top view of a holder H' according to the modification as seen from the Z-direction. Compared with the holder H according to the second embodiment, the holder H' of this modified embodiment has a recess with a different shape provided at a different position. In this modified embodiment, a recess 77 is formed at the center of the base portion 72 in a side surface thereof at the side of the opening O. Unlike the recess 76, the recess 77 has a predetermined depth in the X-direction and is provided as a groove extending along the entire length thereof in the Z-direction. In addition, on the side surface opposite to the recess 77, a protrusion 78 protruding in the insertion direction is formed.

According to such a configuration, since the thickness of the base portion 72 in the Z-direction is fixed, it is possible to suppress the decrease in strength of the base portion (in particular, around the recess).

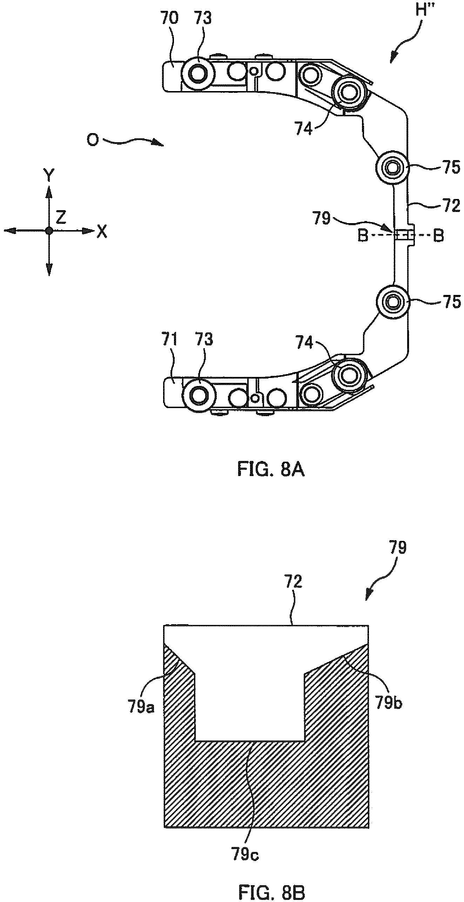

Fig. 8A is a top view of the holder H" according to another modified embodiment as seen from the Z-direction, and Fig. 8B is a cross section taken along the line B-B in Fig. 8A. Compared with the holder H according to the second embodiment, the holder H" of this modified embodiment has a different configuration around the recess. In the holder H" according this modified embodiment, a recess 79 is provided at the center of the base portion 72. The recess 79 has a structure similar to that of the recess 76 of the second embodiment. Specifically, the recess 79 is formed in the top surface of the base portion 72 as a notch structure having a predetermined width in the Y-direction and extending along the entire length thereof in the X-direction. The side surfaces of the recess 79 are perpendicular to the Z-direction. The bottom surface of the recess 79 includes a first bottom surface 79a at the side of the opening O, a second bottom surface 79b opposite to the first bottom surface 79a, and a central third bottom surface 79c between the first bottom surface 79a and the second bottom surface 79b.

Here, the first and second bottom surfaces 79a and 79b are sloped toward the third bottom surface 79c at a predetermined angle relative to the XY plane. In addition, the slope angle of the first bottom surface 79a is larger than the slope angle of the second bottom surface 79b. The third bottom surface 79c is parallel to the XY plane. A portion of the recess 79 where the second bottom surface 79b is formed is extended in the insertion direction.

According to such a configuration, the thickness in the X-direction in the vicinity of the recess 79 is increased ant thus it is possible to suppress the decrease in strength of the base portion 72. Further, by sloping the first and second bottom surfaces 79a and 79b, it becomes easier to insert the device D into the recess 79 and to tilt the device D toward the adapter A.

## Claims

1. A machining system comprising:
a machining device for milling a workpiece depending on machining data;
a workpiece transfer device for storing the workpieces and transferring a certain workpiece to the machining device depending on the machining data; and
a controller capable of switching, in the event of operating the machining device, a first mode for operating the workpiece transfer device and a second mode for stopping the workpiece transfer device.

2. The machining system according to Claim 1, wherein
each of the plurality of workpieces is stored with being secured to an adapter in the workpiece transfer device, and wherein
the machining device comprises:
a holder comprising an opening for the adapter to be inserted thereinto, the holder holding the adapter with being inserted into the opening, and
a recess formed at a portion of the holder, the recess being for releasing the adapter from the holder by tilting a device inserted into the recess toward the adapter held in the holder.

3. A holder for holding an adapter on which a workpiece is secured, the holder comprising:
an opening for the adapter to be inserted thereinto; and
a recess formed at a portion of the holder, the recess being for releasing the adapter from the holder by tilting a device inserted into the recess toward the adapter held in the holder.
